# EUROPEAN PATENT APPLICATION

(11) **EP 4 760 941 A1**
(43) Date of publication of application: **17.06.2026**
(21) Application number: 24902175.9
(22) Date of filing: 20.08.2024
(51) Int. Cl.: H01M 50/358

(54) **ENERGY STORAGE CONTAINER ALLOWING FOR DIRECTIONAL SMOKE GAS DISCHARGING, AND ENERGY STORAGE SYSTEM**

(30) Priority: 15.12.2023 CN 202323427972 U
(71) Applicant: Huawei Digital Power Technologies Co., Ltd., Shenzhen, Guangdong 518043 (CN)
(72) Inventor: ZHOU, Shuqiang, Shenzhen, Guangdong 518043 (CN); LIU, Zongzhe, Shenzhen, Guangdong 518043 (CN); WANG, Yongling, Shenzhen, Guangdong 518043 (CN); LUO, Ming, Shenzhen, Guangdong 518043 (CN); ZHOU, Bo, Shenzhen, Guangdong 518043 (CN)
(74) Representative: Maiwald GmbH
(86) International application number: PCT/CN2024/113245
(87) International publication number: WO 2025/123749

(57) **Abstract**

An energy storage container (100) includes a battery cluster, a container body (110), and a flue (130). The container body (110) includes a rear wall (112) and a container door. The rear wall (112) and the container door are disposed in parallel. The battery cluster and the flue (130) are disposed in the container body (110). The plurality of battery clusters are arranged in parallel. The battery clusters and the flues (130) are in a one-to-one correspondence. The flue (130) is located between the battery cluster and the rear wall (112). The flue (130) is provided with a plurality of flue gas inlets (131) and a flue gas outlet (132). A boss (123) facing the flue (130) is disposed on a battery pack (120), the boss (123) passes through the flue gas inlet (131), and a sealing member (136) is disposed between the flue gas inlet (131) and an outer wall that is of the boss (123) and that is in contact with a periphery of the flue gas inlet (131). The boss (123) is of a hollow structure, the boss (123) communicates with the inside of the battery pack (120), a surface that is of the boss (123) and that is located in the flue (130) is provided with an opening, and a pressure relief valve (122) is installed on the opening. When thermal runaway occurs in the battery pack (120) and high-temperature flue gas is released, the pressure relief valve (122) of the battery pack (120) opens, and the battery pack (120) communicates with a corresponding flue (130) through the boss (123) and the pressure relief valve (122). The high-temperature flue gas is released to the flue (130) directionally, to prevent thermal runaway from spreading to another battery pack (120) or battery cluster. Then, the high-temperature flue gas is exhausted to the outside of the container body (110) through the flue gas outlet (132), to implement directional flue gas exhausting of the energy storage container (100).

## Description

This application claims priority to Chinese Patent Application No. 202323427972.2, filed with the China National Intellectual Property Administration on December 15, 2023 and entitled "ENERGY STORAGE CONTAINER EXHAUSTING FLUE GAS DIRECTIONALLY AND ENERGY STORAGE SYSTEM", which is incorporated herein by reference in its entirety.

### TECHNICAL FIELD

This application relates to the field of energy storage safety technologies, and in particular, to an energy storage container exhausting flue gas directionally and an energy storage system.

### BACKGROUND

In an electrochemical energy storage system, due to a principle and a structural characteristic of a battery, a large amount of heat is usually generated because of internal resistance heating during repeated use, and the heat gradually increases. If the accumulated heat is not effectively dissipated, a temperature further increases. When the temperature reaches a limit, thermal balance of the battery is disturbed, and consequently, a series of self-heating side reactions are caused, a large amount of combustible gas is generated, and thermal runaway occurs. This may eventually lead to a fire inside the battery, bring about an explosion in severe cases, and cause a safety hazard. When the battery is abnormal and thermal runaway occurs, a large amount of combustible gas and high-temperature flue gas is generated. Therefore, how to quickly exhaust the combustible gas and the high-temperature flue gas inside the energy storage system out of a container to prevent a container body from exploding becomes an urgent problem to be resolved.

### SUMMARY

**In** light of disadvantages of the conventional technology, the present invention provides an energy storage apparatus exhausting flue gas directionally. When thermal runaway occurs in a battery and gas is generated, flue gas is directionally exhausted to a flue, and is directly exhausted out of a cabinet through the flue, to prevent the flue gas from accumulating inside the cabinet and consequently causing a burning or explosion accident.

According to a first aspect, this application provides an energy storage container exhausting flue gas directionally, where the energy storage container includes at least one battery cluster, a container body, and at least one flue, the container body includes a rear wall and a container door, the rear wall and the container door are disposed in parallel, the at least one battery cluster and the at least one flue are disposed in the container body, the plurality of battery clusters are arranged in parallel, the at least one battery cluster and the at least one flue are in a one-to-one correspondence, and the at least one flue is located between the at least one battery cluster and the rear wall. Each of the at least one flue is provided with a plurality of flue gas inlets and a flue gas outlet, and the flue gas outlet communicates with an external environment of the energy storage container. Each of the at least one battery cluster includes a plurality of battery packs, the plurality of battery packs are stacked, each flue extends along a stacking direction of the plurality of battery packs, a boss facing the flue is disposed on an outer wall of each of the plurality of battery packs, the boss passes through the flue gas inlet, and a sealing member is disposed between the flue gas inlet and an outer wall that is of the boss and that is in contact with a periphery of the flue gas inlet. The boss is of a hollow structure, the boss communicates with the inside of the battery pack, a surface that is of the boss and that is located in the flue is provided with an opening, and a pressure relief valve is installed on the opening. When thermal runaway occurs in a specific battery pack in a specific battery cluster, the battery pack releases high-temperature flue gas, and pressure inside the battery pack increases sharply. In this case, the pressure relief valve of the battery pack opens, and the battery pack communicates with a corresponding flue through the boss and the pressure relief valve. The high-temperature flue gas is released to the flue through the pressure relief valve directionally, to prevent thermal runaway from spreading to another battery pack or battery cluster. Then, the high-temperature flue gas is exhausted to the outside of the container body through the flue gas outlet, to implement directional flue gas exhausting of the energy storage container.

In a possible implementation, the flue is provided with an air vent, the air vent communicates with the external environment, and a position that is of the air vent and that is on the flue is lower than a position of the flue gas outlet. When the energy storage container is in a normal operating mode, the air vent and the flue gas outlet may be used as an air vent and a gas outlet of the flue, so that the energy storage container exchanges gas with the external environment, to maintain a balance of air pressure inside the flue. When the energy storage container is in a thermal runaway state, the air vent may alternatively be used as the flue gas outlet of the flue. When thermal runaway occurs in the battery pack, the high-temperature flue gas is released. Flue gas with a higher density may be exhausted from the air vent located below, and flue gas with a lower density can be exhausted from the flue gas outlet located above, to distribute the flue gas and quickly exhaust the gas.

In a possible implementation, a first fan is disposed at the flue gas outlet; and/or a second fan is disposed at the air vent. In this way, air flowing rates at the air vent and the flue gas outlet are accelerated, and the air exchange between the energy storage container and the external environment is accelerated.

In a possible implementation, the flue includes a side wall, the plurality of flue gas inlets are provided in the side wall, and the side wall and the rear wall are disposed in parallel. The container body includes a top wall and a bottom wall, the rear wall is connected between the top wall and the bottom wall, and two ends that are of the side wall and that are disposed opposite to each other along a direction of a spacing between the top wall and the bottom wall are respectively connected to the top wall of the container body and the bottom wall of the container body. In this design, the flue may reuse the rear wall of the energy storage container, so that the flue gas outlet of the flue does not need to be communicated with the gas outlet in the side wall of the container body through a dedicated pipe, to reduce an installation procedure of the energy storage container and improve installation efficiency of the flue.

In a possible implementation, the flue gas outlet is provided in the rear wall, or the flue gas outlet is provided in the top wall. The flue gas outlet can be flexibly designed, to improve flexibility of a flue design.

In a possible implementation, the air vent is provided in the rear wall, or the air vent is provided in the bottom wall. The air vent can be flexibly designed, to improve flexibility of a flue design.

In a possible implementation, each flue includes two side walls disposed in parallel, one side wall is disposed opposite to the battery cluster, the other side wall is located between the one side wall and the rear wall, and the one side wall is provided with the plurality of flue gas inlets. The flue and the container body are structures independent of each other, so that the flue can be flexibly designed based on a structure design of the container body, to improve flexibility and applicability of the flue.

In a possible implementation, the other side wall is provided with the flue gas outlet, the rear wall of the container body is provided with a gas outlet, and the gas outlet communicates with the flue gas outlet; or a top wall of the flue is provided with the flue gas outlet, a top wall of the container body is provided with a gas outlet, and the gas outlet communicates with the flue gas outlet. The flue gas outlet can be flexibly designed, to improve flexibility of a flue design.

In a possible implementation, the other side wall is provided with the air vent, the rear wall of the container body is provided with a gas vent, and the gas vent communicates with the air vent; or a bottom wall of the flue is provided with the air vent, a bottom wall of the container body is provided with a gas vent, and the gas vent communicates with the air vent. The air vent can be flexibly designed, to improve flexibility of a flue design.

According to a second aspect, this application provides an energy storage system, where the energy storage system includes the energy storage container according to the first aspect and a power converter, and the power converter is configured to convert an alternating current output by an external alternating current power supply into a direct current and output the direct current to the energy storage container; and/or the power converter is configured to convert a direct current output by the energy storage container into an alternating current and output the alternating current to a load or a power grid.

According to a third aspect, this application provides an energy storage container, where the energy storage container includes at least one battery cluster, a container body, and at least one flue, the container body includes a rear wall and a container door, the rear wall and the container door are disposed in parallel, the at least one battery cluster and the at least one flue are disposed in the container body, the plurality of battery clusters are arranged in parallel, the at least one battery cluster and the at least one flue are in a one-to-one correspondence, and the at least one flue is located between the at least one battery cluster and the rear wall. Each of the at least one flue is provided with a plurality of flue gas inlets and a flue gas outlet, and the flue gas outlet communicates with an external environment of the energy storage container. Each of the plurality of battery clusters includes a plurality of battery packs, the plurality of battery packs are stacked, a pressure relief valve is disposed on an outer wall of each of the plurality of battery packs, and the pressure relief valve of each battery pack is disposed facing the flue. Each of the plurality of flues extends along a stacking direction of the plurality of battery packs, each flue is provided with a plurality of flue gas inlets and a flue gas outlet, the flue gas outlet communicates with the external environment of the energy storage container, the plurality of flue gas inlets and the plurality of battery packs are in a one-to-one correspondence, a sealing member is disposed between the pressure relief valve of each battery pack and a corresponding flue gas inlet, an opening at one end of the sealing member covers the pressure relief valve of each battery pack, and the other end of the sealing member covers the corresponding flue gas inlet. When thermal runaway occurs in a specific battery pack in a specific battery cluster, the battery pack releases high-temperature flue gas, and pressure inside the battery pack increases sharply. In this case, the pressure relief valve of the battery pack opens, and the battery pack communicates with a corresponding flue through the pressure relief valve. The high-temperature flue gas is released to the flue through the pressure relief valve directionally, to prevent thermal runaway from spreading to another battery pack or battery cluster. Then, the high-temperature flue gas is exhausted to the outside of the container body through the flue gas outlet, to implement directional flue gas exhausting of the energy storage container.

In a possible implementation, the outer wall of each battery pack is disposed opposite to the side wall of a corresponding flue, the outer wall of each battery pack is provided with a slot, the side wall of the flue is provided with a slot, a sealing member is disposed between the outer wall of each battery pack and the side wall of the flue, two ends that are of the sealing member and that are along an arrangement direction of the outer wall and the side wall are respectively located in the slot in the outer wall of the battery pack and the slot in the side wall of the flue. The sealing member and the slots are designed, so that a sealing structure can be formed between the outer wall of the battery pack and the first side wall. When thermal runaway occurs in the battery pack, the pressure relief valve of the battery pack opens. The high-temperature flue gas inside the battery pack is released to the sealed space, then released to the flue through the flue gas inlet on the first side wall, and then released to the external environment through the flue gas outlet in the second side wall, to implement directional flue gas exhausting of the energy storage container.

In a possible implementation, the flue is provided with a plurality of sub-flues, the plurality of sub-flues all communicate with the flue, an extension direction of the plurality of sub-flues is perpendicular to an extension direction of the flue, the plurality of sub-flues and the plurality of battery packs are in a one-to-one correspondence, and the plurality of sub-flues are provided with the flue gas inlet. In such a design, the pressure relief valve of the battery pack may be located on a top wall or a bottom wall of the battery pack, so that more battery pack models are provided for the energy storage container, and application scenarios of the flue are enriched.

In a possible implementation, a spring component is disposed at the flue gas inlet of the plurality of sub-flues, an interface is disposed on each battery pack, and the spring component is inserted into the interface of a corresponding battery pack. When the battery pack is installed in a specified position of the energy storage container, the spring component at the flue gas inlet of the sub-flue is automatically inserted into the interface of the battery pack to automatically form a sealing structure, so that installation efficiency of the battery pack is improved. When thermal runaway occurs in the battery pack, the pressure relief valve of the battery pack opens. The high-temperature flue gas inside the battery pack is released to the sealed space, then released to the sub-flue through the flue gas inlet on a lower side wall of the flue, and then released to the external environment through the flue gas outlet of the flue, to implement directional flue gas exhausting of the energy storage container.

According to a fourth aspect, this application provides an energy storage system, where the energy storage system includes the energy storage container according to the first aspect and a power converter, and the power converter is configured to convert an alternating current output by an external alternating current power supply into a direct current and output the direct current to the energy storage container; and/or the power converter is configured to convert a direct current output by the energy storage container into an alternating current and output the alternating current to a load or a power grid.

### BRIEF DESCRIPTION OF DRAWINGS

FIG. 1 is a diagram of an application scenario of an energy storage container according to an embodiment of this application;
FIG. 2 is a first top view of a cross section of an energy storage container according to this application;
FIG. 3 is a first side view of a cross section of an energy storage container according to this application;
FIG. 4 is a second side view of a cross section of an energy storage container according to this application;
FIG. 5 is a third side view of a cross section of an energy storage container according to this application;
FIG. 6 is a fourth side view of a cross section of an energy storage container according to this application;
FIG. 7 is a fifth side view of a cross section of an energy storage container according to this application;
FIG. 8 is a sixth side view of a cross section of an energy storage container according to this application;
FIG. 9 is a seventh side view of a cross section of an energy storage container according to this application;
FIG. 10 is an eighth side view of a cross section of an energy storage container according to this application;
FIG. 11 is a ninth side view of a cross section of an energy storage container according to this application;
FIG. 12 is a tenth side view of a cross section of an energy storage container according to this application; and
FIG. 13 is a second top view of a cross section of an energy storage container according to this application.

### Reference numerals:

100: energy storage container; 200: photovoltaic panel; 300: DC/DC converter; 400: inverter; 500: power grid; 600: load;
110: container body; 1101: gas outlet; 1102: gas vent; 112: rear wall; 113: top wall; 114: bottom wall;
120: battery pack; 121: battery; 122: pressure relief valve; 123: boss; 124: first slot; 125: interface;
130: flue; 1301: first side wall; 1302: second side wall; 131: flue gas inlet; 131: spring component; 132: flue gas outlet; 133: air vent; 134: first fan; 135: second fan; 136: sealing member; 137: second slot; 139: sub-flue.

### DESCRIPTION OF EMBODIMENTS

To make objectives, technical solutions, and advantages of this application clearer, the following further describes this application in detail with reference to the accompanying drawings. However, example implementations may be implemented in a plurality of forms, and should not be construed as being limited to implementations described herein. Identical reference numerals in the accompanying drawings indicate identical or similar structures. Therefore, repeated description thereof is omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

The terms "first", "second", and the like in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

It should be noted that specific details are set forth in the following descriptions to facilitate understanding of this application. However, this application can be implemented in a plurality of manners different from those described herein, and a person skilled in the art can make similar inferences without departing from the connotation of this application. Therefore, this application is not limited to the specific implementations disclosed below.

For ease of understanding, terms in embodiments of this application are first explained.

"And/or" describes only an association relationship between associated objects and indicates that three relationships may exist. For example, A and/or B may indicate the following three cases: Only A exists, both A and B exist, and only B exists.

"A plurality of" means two or more.

A "connection" is an electrical connection, and a connection between two electrical elements may be a direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, and A and B are connected through C.

The following embodiments of this application provide an energy storage container. The energy storage container may be used in an energy storage application scenario of photovoltaic power generation.

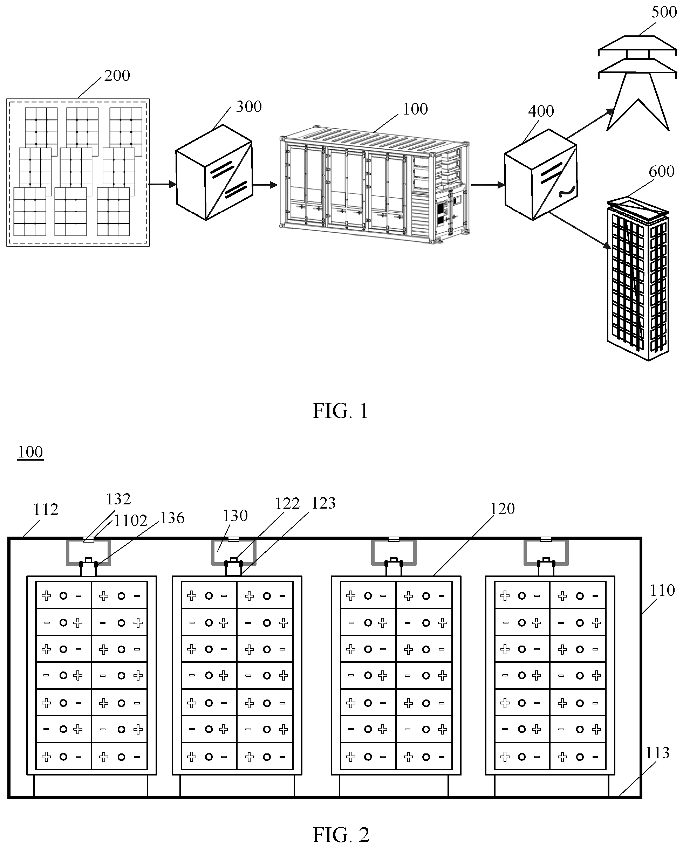

For example, FIG. 1 is a diagram of a framework structure of a photovoltaic system. As shown in FIG. 1, the photovoltaic system includes a photovoltaic panel 200, a direct current/direct current converter 300, an energy storage container 100, and a direct current/alternating current converter 400. The photovoltaic panel 200 is configured to convert solar energy into direct current electric energy. The direct current/direct current converter 300 is configured to convert a direct current generated by the photovoltaic panel 200 into an adjustable direct current (that is, to perform direct current to direct current conversion on the direct current output by the photovoltaic panel 200, and output a direct current whose voltage and current are both adjustable), to implement dynamic control on the direct current generated by the photovoltaic panel 200 and balance output power of each photovoltaic panel 200, and then output the adjustable direct current to the energy storage container 100 for electric energy storage. The direct current output by the energy storage container 300 is converted into an alternating current by using the direct current/alternating current converter 400, and the alternating current is output to a power grid 500. The alternating current output by the direct current/alternating current converter may be further used to supply power to a load 600. The load 600 may be an electric device in an industrial park.

The energy storage container usually includes a plurality of battery clusters, the battery cluster includes a plurality of battery packs, and the battery pack includes a plurality of batteries. During actual application, thermal runaway may occur due to mechanical abuse, electrical abuse, thermal abuse, defects of the battery, and the like in an operating process of the battery. In a thermal runaway process, the battery generates a large amount of combustible gas, and the combustible gas has a high risk of burning and explosion. Shock waves and thermal radiation caused by burning and explosion, debris splashes caused by cabinet disintegration, and the like pose a threat to safety of nearby people or objects, and a risk of valve opening caused by thermal runaway exists. Combustible gases such as H₂ and CO released when a valve opens are in contact with a spark or a high-temperature surface, and consequently, an explosion accident may be caused in a relatively enclosed environment inside the cabinet, causing damage to the surrounding environment or people. To resolve the problem of thermal runaway of the energy storage container, this application provides an energy storage container 100. When thermal runaway occurs inside the energy storage container 100, the energy storage container 100 can implement directional flue gas exhausting, and exhaust internal high-temperature flue gas and combustible gas out of the energy storage container in time, to prevent the high-temperature flue gas and the combustible gas from accumulating inside the energy storage container and consequently causing an explosion due to a sharp increase of air pressure inside the container.

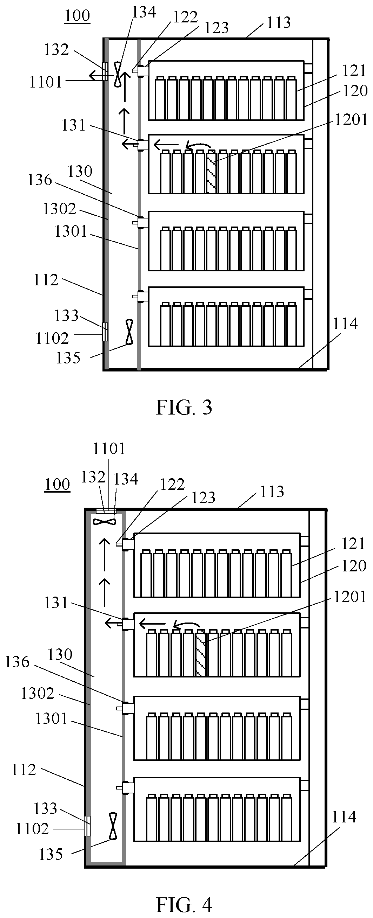

For a diagram of the energy storage container 100 according to an embodiment of this application, refer to FIG. 2 and FIG. 3. FIG. 2 is a sectional view of the energy storage container 100 in a top view direction. FIG. 3 is a sectional view of the energy storage container 100 in a side view direction. The energy storage container 100 includes at least one battery cluster, a container body 110, and at least one flue 130. The container body 130 includes a rear wall 112 and a container door (not shown in the figure). The rear wall 112 and the container door are opposite and disposed in parallel. The at least one battery cluster and the at least one flue 130 are disposed in the container body. A plurality of battery clusters are arranged in parallel. The at least one battery cluster and the at least one flue are in a one-to-one correspondence, and the at least one flue 130 is located between the at least one battery cluster and the rear wall 112. Each flue 130 is provided with a plurality of flue gas inlets 131 and a flue gas outlet 132, and the flue gas outlet 132 communicates with an external environment of the energy storage container 100. Each battery cluster includes a plurality of battery packs 120, and the battery pack 120 includes a plurality of batteries 121. The plurality of battery packs 120 are stacked from bottom to top. Each flue 130 extends along a stacking direction of the plurality of battery packs 120. A boss 123 facing the flue 130 is disposed on an outer wall of each battery pack 120. The boss 123 passes through the flue gas inlet 131. One end of the boss 123 is connected to the outer wall of the battery pack 120, and the other end of the boss 123 passes through the flue gas inlet 131 of the flue 130, so that a pressure relief valve 122 is located in the flue 130. A sealing member 136 is disposed between the flue gas inlet and an outer wall that is of the boss 123 and that is in contact with a periphery of the flue gas inlet 131, to ensure sealing effect between the boss 123 and the flue gas inlet 131. The boss 123 is of a hollow structure, the boss 123 communicates with the inside of the battery pack 120, a side that is of the boss 123 and that is located in the flue 130 is provided with an opening, and the pressure relief valve 122 is installed on the opening. The inside of the battery pack 120 communicates with the flue 130 through the boss 123 and the pressure relief valve 122. When thermal runaway occurs in the battery pack 120, the pressure relief valve 122 opens, and high-temperature flue gas inside the battery pack 120 is first released to the hollow structure of the boss 123, and then released to the flue 130 through the pressure relief valve 122. For example, the high-temperature flue gas and combustible gas generated when thermal runaway occurs in the battery 1201 are exhausted to the flue 130 through the pressure relief valve 122, and then exhausted to the external environment through the flue gas outlet 132 of the flue 130. A gas flowing direction is shown by an arrow direction in FIG. 3. The high-temperature flue gas generated by the battery pack 120 is exhausted into the flue 130, so that air pressure inside the battery pack 120 can be quickly reduced, to prevent an explosion. In addition, the battery packs 120 and the flue gas inlets 131 are disposed in a one-to-one correspondence, so that high-temperature flue gas generated through thermal runaway of a specific battery pack 120 can enter a corresponding flue gas inlet 131 directionally. In this way, the high-temperature flue gas released by the battery pack 120 can be prevented from spreading inside a same battery cluster, so that thermal runaway is prevented from spreading to another battery pack 120. Further, each battery cluster corresponds to one flue 130, so that when thermal runaway occurs in a battery pack 120 in a specific battery cluster, the battery pack 120 in which thermal runaway occurs can quickly exhaust high-temperature flue gas to the inside of the flue 130, to prevent thermal runaway from spreading to another battery cluster and consequently causing an explosion or fire catching due to thermal runaway of the entire energy storage container 100.

Generally, maintenance personnel or installation personnel usually operate in front of the container door of the energy storage container 100. When the flue 130 is provided in the rear wall 112 of the energy storage container 100, the flue gas outlet 132 may be provided in a side wall that is of the flue 130 and that is opposite to the rear wall 112 of the energy storage container 100. In addition, a position that is of the rear wall 112 of the energy storage container 100 and that is corresponding to the flue gas outlet 132 is provided with a gas vent 1102, and the gas vent 1102 in the rear wall 112 communicates with the flue gas outlet 132 of the flue 130, so that gas inside the flue 130 is exhausted to the external environment through the flue gas outlet 132 and the gas vent 1102. The gas vent 1102 is provided in the rear wall 112 of the energy storage container 100, so that gas released from the flue 130 and the gas vent 1102 can be prevented from impacting people around and consequently causing a safety accident.

A base is disposed at the bottom of the energy storage container 100, and may be used as a basis support for the energy storage container 100, to improve stability of an overall structure of the energy storage container 100.

It should be noted that a shape of the flue 130 is not limited, and the flue 130 may be of a cylindrical tubular structure, or may be of a square tubular structure.

It should be noted that shapes and quantities of flue gas outlets 132 and flue gas inlets 131 are not limited either. For example, the flue gas outlet 132 and the flue gas inlet 131 may be in any shape, for example, may be but are not limited to being in a regular shape such as a circle or a square, or may be in some possible irregular shapes. There may be one or more flue gas outlets 132. A shape of the flue gas inlet 131 matches a shape of the boss 123. For example, when the flue gas inlet 131 is of a circular shape, the boss 123 may be of a cylindrical shape, and when the flue gas inlet 131 is of a square shape, the boss 123 is a cube. The sealing member 136 may be disposed around an outer peripheral wall of the boss 123. In this way, sealing between the boss 123 and the flue gas inlet 131 is enhanced.

A type of the pressure relief valve 122 is not specifically limited in this embodiment of this application. For example, the pressure relief valve 122 may be a metallic or plastic explosion-proof sheet with a score, and is used as an explosion-proof element. The explosion-proof sheet breaks when specific pressure is reached, to perform pressure relief. The pressure relief valve 122 may alternatively be a waterproof and breathable pressure relief valve 122. A waterproof and breathable film is disposed in the pressure relief valve 122. When the battery pack 120 is in a normal operating state, gas inside the battery pack 120 exchanges gas with the outside through the pressure relief valve 122, to maintain a balance of air pressure inside the battery pack 120. The waterproof and breathable film can prevent dust and water drops from entering the battery pack 120. When thermal runaway occurs inside the battery pack 120, air pressure inside the battery pack 120 is excessively high, the pressure relief valve 122 is in an open state, and quickly exhausts the gas inside the battery pack 120, to implement an explosion-proof function. The pressure relief valve 122 may alternatively be a spring pressure relief valve 122, and includes a valve body, an elastic component, and a protection cover. When air pressure inside the battery pack 120 increases sharply, the elastic component pushes the protection cover open, and the pressure relief valve 122 opens to implement quick pressure relief.

The pressure relief valve 122 has a positive pressure oxygen blocking function. The pressure relief valve 122 can prevent external oxygen from entering the battery pack 120. In addition, gas inside the battery pack 120 can exchange gas with the outside through the pressure relief valve 122.

A sum of an area of the flue gas outlet 132 and an area of the flue gas inlet 131 should be greater than or equal to an area through which gas can flow after the pressure relief valve 122 of the battery pack 120 opens, to ensure flue gas exhausting effect, so that the high-temperature flue gas and the combustible gas are prevented from accumulating inside the battery pack 120 or the flue 130 and consequently causing an explosion.

A cooling apparatus may be disposed in the flue 130 to cool and condense the high-temperature flue gas and the combustible gas, to reduce content and effect of a combustible substance in the flue gas, so that the flue gas is prevented from causing damage to a surrounding environment or people. For example, the condensation apparatus may be a cooling net, a cooling plate, an evaporator, or the like. The cooling apparatus may be disposed at the flue gas inlet 131 of the flue 130.

There are many liquid or solid combustible particles, for example, a droplet of an electrolyte, in an emission emitted when thermal runaway occurs in the battery pack 120. Therefore, a filtering apparatus may be disposed in the flue 130 to further reduce the content and effect of the combustible substance in the flue gas. For example, the filtering apparatus may be an adsorption cotton layer, an activated carbon layer, a molecular sieve, a cyclone separator, or the like. A liquid combustible particle or a solid combustible particle in the flue gas can be directly filtered out by using the adsorption cotton layer, the activated carbon layer, the molecular sieve, the cyclone separator, or the like, to reduce the combustible substance in the flue gas. The filtering apparatus may be disposed at the flue gas inlet 131 of the flue 130, or may be disposed on a side of the condensation apparatus.

Further, a diluting apparatus may be disposed in the flue 130 to dilute the combustible gas, to reduce a concentration of combustible gases such as hydrogen, carbon monoxide, methane, and a plurality of alkanes in the high-temperature flue gas. For example, non-combustion-supporting gas may be injected into the flue 130 to dilute the concentration of the combustible gas. Alternatively, chemical reaction is performed on the combustible gas, to convert the combustible gas into clean gas, such as water vapor or carbon dioxide, so that the concentration of the combustible gas is reduced. Therefore, the diluting apparatus may be a non-combustion-supporting gas storage component. When thermal runaway occurs inside the energy storage container 100, the non-combustion-supporting gas is released to the flue 130, to quickly dilute the concentration of the combustible gas in the flue 130. In addition, the diluting apparatus may alternatively be a porous structure attached with an oxidant and a catalyst, for example, a metal mesh, metal wool, or foam. Similarly, the catalyst may be a precious metal catalyst, for example, palladium, platinum, or rhodium. The oxidant may be copper oxide, sodium peroxide, or potassium permanganate. An oxidation-reduction reaction can be performed on the combustible substance in the emission by using the diluting apparatus, to form a non-combustible substance. For example, a reaction of hydrogen and carbon monoxide in the flue gas into non-combustible water and carbon dioxide is catalyzed. The diluting apparatus may be disposed at the flue gas outlet 132.

The flue 130 is further provided with an air vent 133, to ensure balance of air pressure inside the flue 130. For a position and a structure of the air vent 133, refer to FIG. 3. The air vent 133 communicates with the external environment of the energy storage container 100. A position that is of the air vent 133 and that is on the flue 130 is lower than a position of the flue gas outlet 132. For example, a gas inlet, namely, the air vent 133, and the flue gas outlet 132 of the flue 130 may be respectively disposed at two ends that are on the rear wall 112 of the energy storage container 100 and that are along a height direction of the energy storage container 100. For example, the air vent is located below the flue gas outlet 132. The air vent 133 is disposed, so that the high-temperature gas generated by the battery pack 120 can be prevented from being exhausted into the flue 130 and consequently causing deformation of the flue 130 due to a sharp decrease in air pressure inside the flue 130. In addition, the high-temperature gas generated by the battery pack 120 can be quickly exhausted to the external environment, so that a risk of burning and explosion of the battery pack 120 is reduced. In addition, when the energy storage container 100 exhausts the flue gas, flue gas with a higher density may be exhausted from the air vent 133 located below, and flue gas with a lower density may be exhausted from the flue gas outlet 132 located above, to distribute the flue gas and quickly exhaust the gas.

Further, a first fan 134 may be disposed at the flue gas outlet 133, to improve flue gas exhausting efficiency of the flue 130. Similarly, a second fan 135 may alternatively be disposed at the air vent 133.

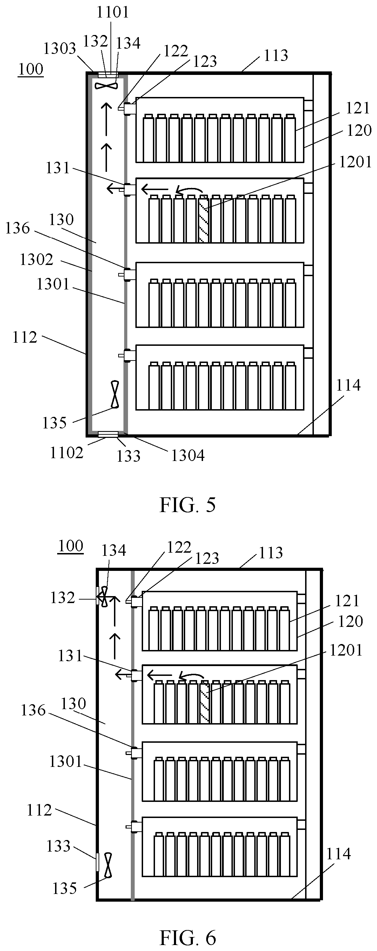

When the flue 130 and the container body are components independent of each other, the flue 130 includes a first side wall 1301, a second side wall 1302, a top wall 1303, and a bottom wall 1304. The first side wall 1301 and the second side wall 1302 are disposed opposite to each other, the first side wall 1301 and the battery cluster are disposed opposite to each other, the second side wall 1302 is located between the first side wall 1301 and the rear wall 112, and the first side wall 1301 is provided with the plurality of flue gas inlets 131. The flue gas outlet 132 is provided in the second side wall 1302, the rear wall 112 of the container body 110 is provided with a gas outlet 1101, and the gas outlet 1101 communicates with the flue gas outlet 132. For a diagram of a structure of the gas outlet, refer to FIG. 3. Alternatively, the top wall 1303 of the flue 130 is provided with the flue gas outlet 132, the top wall 113 of the container body 110 is provided with the gas outlet 1101, and the gas outlet 1101 communicates with the flue gas outlet 132. For a structure of the gas outlet, refer to FIG. 4 or FIG. 5. The gas outlet 1101 and the flue gas outlet 132 may be directly disposed opposite to each other, or the gas outlet 1101 and the flue gas outlet 132 communicate with each other through a gas conducting pipe.

It should be understood that, when the flue gas outlet 132 is provided in the top wall of the flue 130, a rain cover may be disposed at the flue gas outlet 132, so that rain is prevented from entering the flue 130, to prevent rainwater from entering the battery.

Similarly, there are also a plurality of position designs of the air vent 133. The second side wall 1302 is provided with the air vent 133, the rear wall 112 of the container body 110 is provided with the gas vent 1102, and the gas vent 1102 communicates with the air vent 133. Alternatively, the bottom wall 1304 of the flue is provided with the air vent 133, the bottom wall 114 of the container body 110 is provided with the gas vent 1102, and the gas vent 1102 communicates with the air vent 133. For a structure of the gas vent, refer to FIG. 5. The gas vent 1102 and the air vent 133 may be directly disposed opposite to each other, or the gas vent 1102 and the air vent 133 communicate with each other through a gas conducting pipe. When there is a gap between the bottom wall 1304 of the flue and the bottom wall of the container body 110, the air vent 133 is provided in the bottom wall 1304 of the flue, the gas vent 1102 may be provided in the rear wall 112 connected between the bottom wall 1304 of the flue and the bottom wall of the container body 110, and the gas vent 1102 and the air vent 133 communicate with each other through a gas conducting pipe.

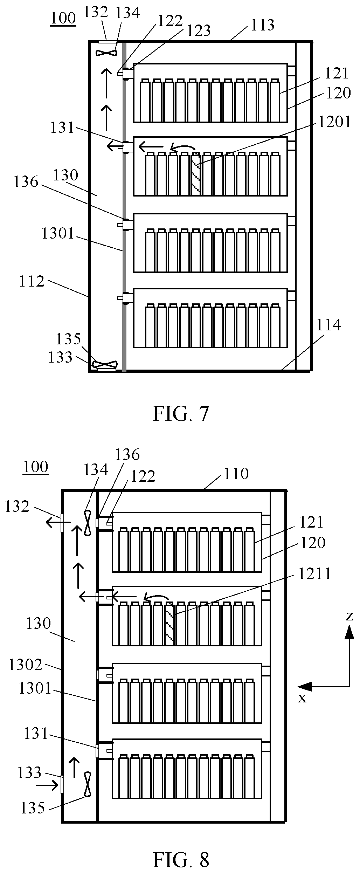

When the flue 130 reuses the rear wall 112 of the energy storage container 100, that is, when the rear wall of the energy storage container 100 and the second side wall 1302 are combined into one wall, the flue 130 includes the first side wall 1301, the plurality of flue gas inlets 131 are provided in the first side wall 1301, and the first side wall 1301 and the rear wall 112 are disposed in parallel. The container body 110 includes the top wall 113 and the bottom wall 114. The rear wall 112 is connected between the top wall 113 and the bottom wall 114. Two ends that are of the first side wall 1301 and that are disposed opposite to each other along a direction of a spacing between the top wall 113 and the bottom wall 114 (that is, the height direction of the energy storage container 100) are respectively connected to the top wall 113 of the container body 110 and the bottom wall 114 of the container body. The flue 130 and the container body 110 are integrally formed, so that a structure of an energy storage system can be effectively simplified. For a structure of the energy storage system, refer to FIG. 6 and FIG. 7. In this case, the side wall of the container body 110 is used as the side wall of the flue 130, and the flue gas outlet 132 of the flue is directly provided in the side wall of the container body 110. The flue gas outlet 132 of the flue 130 may be used as the gas vent 1102 of the container body 110. According to this solution, a communication operation between the flue gas outlet 132 and the gas vent 1102 can be avoided, and a sealing operation between the flue 130 and the container body 110 is omitted. This can effectively simplify an assembling process of the energy storage system, reduce assembly parts of the energy storage container 100, and reduce a risk that the flue gas overflows into the container body 110.

There are a plurality of choices for position designs of the flue gas outlet 132 and the air vent 133 of the flue 130 in the energy storage container 100 provided in this embodiment of this application. The flue gas outlet 132 may be provided in the rear wall 112 of the container body 110. For a diagram of a structure of the flue gas outlet, refer to FIG. 6. Alternatively, the flue gas outlet 110 may be provided in the top wall 113. For a diagram of a structure of the flue gas outlet, refer to FIG. 7. Similarly, the air vent 133 may be provided in the rear wall 112 of the container body 110. For a structure of the air vent, refer to FIG. 3. Alternatively, the air vent 133 is provided in the bottom wall 114 of the container body 110. For a structure of the air vent, refer to FIG. 7.

Based on a same inventive concept, an embodiment of this application further provides an energy storage system. The energy storage system includes the foregoing energy storage container 100 and a power converter. The power converter is configured to convert an alternating current output by an external alternating current power supply into a direct current, and output the direct current to the energy storage container 100; and/or the power converter is configured to convert a direct current output by the energy storage container 100 into an alternating current, and output the alternating current to a load or a power grid. For an architecture of the energy storage system, refer to FIG. 1.

An embodiment of this application further provides an energy storage container 100. The energy storage container 100 includes at least one battery cluster, a container body 110, and at least one flue 130. The container body 110 includes a rear wall 112 and a container door. The rear wall 112 and the container door are disposed in parallel. The at least one battery cluster and the at least one flue 130 are disposed in the container body 110. A plurality of battery clusters are arranged in parallel. The at least one battery cluster and the at least one flue 130 are in a one-to-one correspondence, and the at least one flue 130 is located between the at least one battery cluster and the rear wall 112. Each of the at least one flue 130 is provided with a plurality of flue gas inlets 131 and a flue gas outlet 132, and the flue gas outlet 132 communicates with an external environment of the energy storage container 100. Each of the plurality of battery clusters includes a plurality of battery packs 120, the plurality of battery packs 120 are stacked, a pressure relief valve 122 is disposed on an outer wall of each of the plurality of battery packs 120, and the pressure relief valve 122 of each battery pack 120 is disposed facing the flue 130. Each of the plurality of flues 130 extends along a stacking direction of the plurality of battery packs 120. Each flue 130 is provided with the plurality of flue gas inlets 131 and the flue gas outlet 132. The flue gas outlet 132 communicates with the external environment of the energy storage container 100. The plurality of flue gas inlets 131 and the plurality of battery packs 120 are in a one-to-one correspondence. A sealing member 136 is disposed between the pressure relief valve 122 of each battery pack 120 and a corresponding flue gas inlet 131. An opening at one end of the sealing member 136 covers the pressure relief valve 122 of each battery pack 120, and the other end of the sealing member 136 covers the corresponding flue gas inlet 131.

For a structure of the sealing member, refer to FIG. 8. The sealing member 136 is disposed around each flue gas inlet 131 of the flue 130, and the sealing member 136 may be fastened on a first side wall 1301 of the flue 130, or may be fastened on the outer wall of the battery pack 120. The sealing member 136, the first side wall 1301, and the outer wall of the battery pack 120 enclose sealed space, and the pressure relief valve 122 on the outer wall of the battery pack 120 is located in the sealed space. When the battery pack 120 is installed from the container door to the inside of the energy storage container 100, a tool is usually used to push the battery pack 120 into the inside of the energy storage container 100 along a direction x in FIG. 3. Because the sealing member 136 is elastic and can be compressed, under pressure of the battery pack 120, the sealing member 136 is pressed toward the first side wall 1301, so that a position in which the battery pack 120 and the flue 130 connect to each other is sealed through compression of the sealing member 136, to prevent the flue gas from overflowing into the container body 110. In this design, when thermal runaway occurs in the battery pack 120, the pressure relief valve 122 of the battery pack 120 opens. The high-temperature flue gas inside the battery pack 120 is released to the sealed space, then released to the flue 130 through the flue gas inlet 131 on the first side wall 1301, and then released to the external environment through the flue gas outlet 132 on a second side wall 1302, to implement directional flue gas exhausting of the energy storage container 100. The battery packs 120 and the flue gas inlets 131 are disposed in a one-to-one correspondence, so that high-temperature flue gas generated through thermal runaway of a specific battery pack 120 can enter a corresponding flue gas inlet 131 directionally. In this way, the high-temperature flue gas released by the battery pack 120 can be prevented from spreading inside a same battery cluster, so that thermal runaway is prevented from spreading to another battery pack 120. Further, each battery cluster corresponds to one flue 130, so that when thermal runaway occurs in a battery pack 120 in a specific battery cluster, the battery pack 120 in which thermal runaway occurs can quickly exhaust high-temperature flue gas to the inside of the flue 130, to prevent thermal runaway from spreading to another battery cluster and consequently causing an explosion or fire catching due to thermal runaway of the entire energy storage container 100.

It should be understood that, the flue 130 is further provided with an air vent 133, to ensure balance of air pressure inside the flue 130. The air vent 133 communicates with the external environment of the energy storage container 100. A position that is of the air vent 133 and that is on the flue 130 is lower than a position of the flue gas outlet 132. For example, a gas inlet, namely, the air vent 133, and the flue gas outlet 132 of the flue 130 may be respectively disposed at two ends that are on the rear wall 112 of the energy storage container 100 and that are along a height direction of the energy storage container 100. For example, the air vent is located below the flue gas outlet 132.

Similarly, the flue 130 in this embodiment of this application may reuse the rear wall 112 of the container body 110. For a structure of the flue, refer to FIG. 8. The flue gas outlet 132 and the air vent 133 of the flue may be provided in the rear wall 112 of the container body 110.

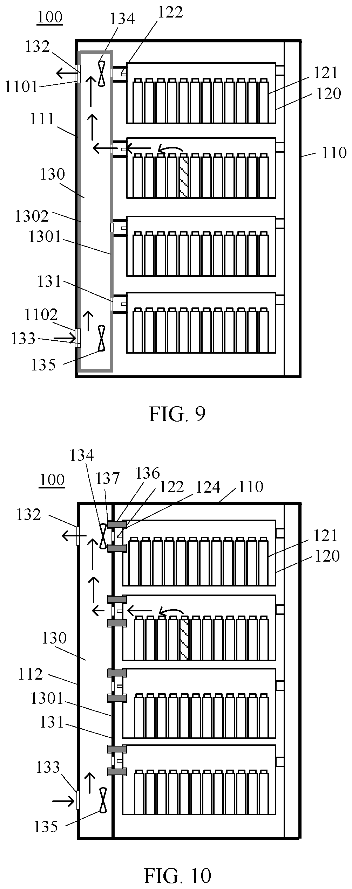

The flue 130 and the container body 110 may alternatively be components independent of each other. The flue 130 includes the first side wall 1301, the second side wall 1302, a top wall 1303, and a bottom wall 1304. The first side wall 1301 and the second side wall 1302 are disposed opposite to each other, the first side wall 1301 and the battery cluster are disposed opposite to each other, the second side wall 1302 is located between the first side wall 1301 and the rear wall 112, and the first side wall 1301 is provided with a plurality of flue gas inlets 131. The flue gas outlet 132 is provided in the second side wall 1302, the rear wall 112 of the container body 110 is provided with a gas outlet 1101, and the gas outlet 1101 communicates with the flue gas outlet 132. For a diagram of a structure, refer to FIG. 9. Alternatively, the top wall 1303 of the flue 130 is provided with the flue gas outlet 132, the top wall 113 of the container body 110 is provided with the gas outlet 1101, and the gas outlet 1101 communicates with the flue gas outlet 132.

Still refer to FIG. 9. The second side wall 1302 is provided with the air vent 133, the rear wall 112 of the container body 110 is provided with the gas vent 1102, and the gas vent 1102 communicates with the air vent 133. Alternatively, the bottom wall 1304 of the flue is provided with the air vent 133, the bottom wall 114 of the container body 110 is provided with the gas vent 1102, and the gas vent 1102 communicates with the air vent 133.

It may be understood that, in a possible example of this application, a first sealing member 136 is a sealing rubber strip, and the sealing member 136 may be fastened to the flue 130 in a manner of bonding or the like, to improve reliability of a connection between the sealing member 136 and the flue 130.

Alternatively, the battery pack 120 and the side wall 1301 of the flue 130 may be provided with a slot, and two ends of the sealing member 136 are clamped to the slots, to fasten the sealing member 136. The outer wall of each battery pack 120 is disposed opposite to the side wall of a corresponding flue 130, the outer wall of each battery pack 120 is provided with a slot, the side wall of the flue 130 is provided with a slot, and two ends of the sealing member 136 are respectively located in the slot in the outer wall of the battery pack 120 and the slot in the side wall of the flue 130.

For a structure of the energy storage container 100, refer to a sectional view of the energy storage container 100 in a side view direction shown in FIG. 10. The outer wall of each battery pack 120 is provided with a first slot 124, the first side wall 1301 of the flue 130 is provided with a second slot 137, and the first slot 124 and the second slot 137 may be disposed opposite to each other, to ensure that gas released by the pressure relief valve 122 is exhausted into the flue 130 directionally. The sealing member 136 is disposed between the outer wall of each battery pack 120 and the first side wall 1301 of the flue 130. One end of the sealing member 136 is clamped into the first slot 124, and the other end of the sealing member 136 is clamped into the second slot 137. The sealing member 136, the first side wall 1301, and the outer wall of the battery pack 120 form sealed space, and the pressure relief valve 122 is located in the sealed space. In this design, when thermal runaway occurs in the battery pack 120, the pressure relief valve 122 of the battery pack 120 opens. The high-temperature flue gas inside the battery pack 120 is released to the sealed space, then released to the flue 130 through the flue gas inlet 131 on the first side wall 1301, and then released to the external environment through the flue gas outlet 132 on the second side wall 1302, to implement directional flue gas exhausting of the energy storage container 100.

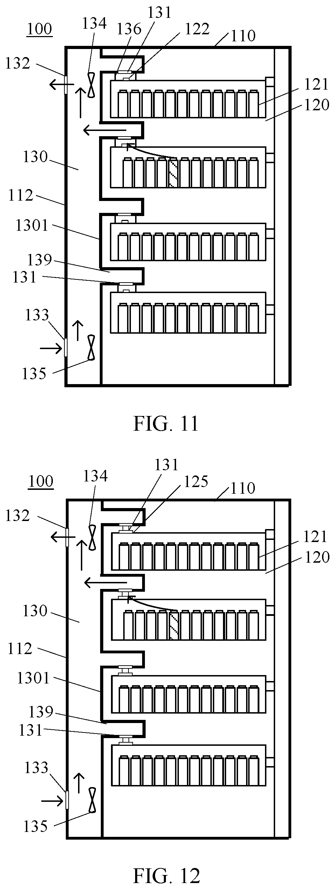

In another example, for a structure of the energy storage container 100, refer to a sectional view of the energy storage container 100 in a side view direction shown in FIG. 11. The flue 130 is provided with a plurality of sub-flues 139, the plurality of sub-flues 139 all communicate with the flue 130, an extension direction of the plurality of sub-flues 139 is perpendicular to an extension direction of the flue 130, and the plurality of sub-flues 139 and the plurality of battery packs 120 are in a one-to-one correspondence. In this case, the pressure relief valve 122 of the battery pack 120 is disposed on an upper outer wall of the battery pack 120, the plurality of sub-flues 139 include a lower side wall, the lower side wall is disposed opposite to the pressure relief valve 122 of the battery pack 120, the lower side wall of the sub-flue 139 is provided with the flue gas inlet 131, and the plurality of sub-flues 139 are disposed opposite to the pressure relief valve 122 of the battery pack 120. When thermal runaway occurs in the battery pack 120, the pressure relief valve 122 opens. The high-temperature flue gas inside the battery pack 120 is first released to the sub-flue 139, and then released to the flue 130, to prevent the flue gas from spreading between battery clusters and consequently causing thermal runaway to spread to another battery pack 120 or another battery cluster.

Similarly, still refer to FIG. 11. The sealing member 136 is disposed between the lower side wall of the sub-flue 139 and the upper outer wall of the battery pack 120. The sealing member 136, the lower side wall of the sub-flue 139, and the upper outer wall of the battery pack 120 enclose sealed space, and the pressure relief valve 122 on the outer wall of the battery pack 120 is located in the sealed space. In this design, when thermal runaway occurs in the battery pack 120, the pressure relief valve 122 of the battery pack 120 opens. The high-temperature flue gas inside the battery pack 120 is released to the sealed space, then released to the flue 130 through the flue gas inlet 131 on the first side wall 1301, and then released to the external environment through the flue gas outlet 132 on the second side wall 1302, to implement directional flue gas exhausting of the energy storage container 100.

In another example, for a structure of the energy storage container 100, refer to a sectional view of the energy storage container 100 in a side view direction shown in FIG. 12. A movable spring port is disposed at the flue gas inlet 131 of the plurality of sub-flues 139, an interface 125 is disposed at each battery pack 120, and the movable spring port is inserted into the interface 125 of a corresponding battery pack 120. When the battery pack 120 is installed at a corresponding position inside the energy storage container 100, the movable spring port is automatically inserted into the interface 125 on the outer wall of the corresponding battery pack 120, to form sealed space between the lower side wall of the flue 130 and the outer wall of the battery pack 120, and the pressure relief valve 122 on the outer wall of the battery pack 120 is located in the sealed space. When thermal runaway occurs in the battery pack 120, the pressure relief valve 122 of the battery pack 120 opens. The high-temperature flue gas inside the battery pack 120 is released to the sealed space, then released to the sub-flue 139 through the flue gas inlet 131 on the lower side wall of the flue 130, and then released to the external environment through the flue gas outlet 132 of the flue 130, to implement directional flue gas exhausting of the energy storage container 100.

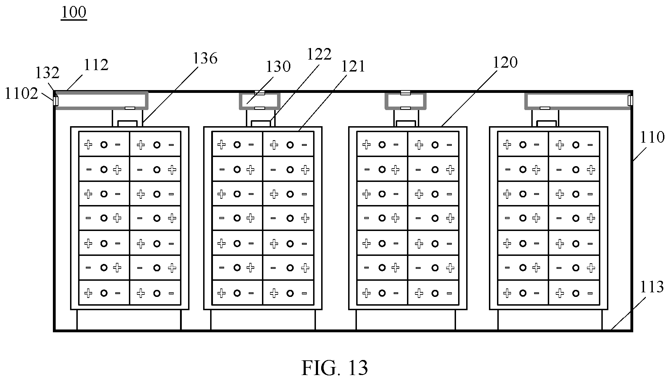

In another example, for a structure of the energy storage container 100, refer to a sectional view of the energy storage container 100 in a top view direction shown in FIG. 13. The flue gas outlets 132 of the flues 130 located on a left side and a right side of the energy storage container 100 may alternatively be disposed toward a left side wall and a right side wall of the energy storage container 100 respectively. Correspondingly, the gas outlets 1102 of the energy storage container 100 may be provided in the left side wall and the right side wall of the container body 110 of the energy storage container 100. In other words, the flue gas inlets 131 and the flue gas outlets 132 of the flues 130 located on the left side and the right side of the container may be respectively located in two mutually perpendicular side walls of the flues 130.

Based on a same inventive concept, an embodiment of this application further provides an energy storage system. The energy storage system includes the foregoing energy storage container 100 and a power converter. The power converter is configured to convert an alternating current output by an external alternating current power supply into a direct current, and output the direct current to the energy storage container 100; and/or the power converter is configured to convert a direct current output by the energy storage container 100 into an alternating current, and output the alternating current to a load or a power grid. For an architecture of the energy storage system, refer to FIG. 1.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage container exhausting flue gas directionally, wherein the energy storage container comprises at least one battery cluster, a container body, and at least one flue, the container body comprises a rear wall and a container door, the rear wall and the container door are disposed in parallel, the at least one battery cluster and the at least one flue are disposed in the container body, the plurality of battery clusters are arranged in parallel, the at least one battery cluster and the at least one flue are in a one-to-one correspondence, and the at least one flue is located between the at least one battery cluster and the rear wall;
each of the at least one flue is provided with a plurality of flue gas inlets and a flue gas outlet, and the flue gas outlet communicates with an external environment of the energy storage container;
each of the at least one battery cluster comprises a plurality of battery packs, the plurality of battery packs are stacked, each flue extends along a stacking direction of the plurality of battery packs, a boss facing the flue is disposed on an outer wall of each of the plurality of battery packs, the boss passes through the flue gas inlet, and a sealing member is disposed between the flue gas inlet and an outer wall that is of the boss and that is in contact with a periphery of the flue gas inlet; and
the boss is of a hollow structure, the boss communicates with the inside of the battery pack, a surface that is of the boss and that is located in the flue is provided with an opening, and a pressure relief valve is installed on the opening.

2. The energy storage container according to claim 1, wherein the flue is provided with an air vent, the air vent communicates with the external environment, and a position that is of the air vent and that is on the flue is lower than a position of the flue gas outlet.

3. The energy storage container according to claim 2, wherein a first fan is disposed at the flue gas outlet; and/or a second fan is disposed at the air vent.

4. The energy storage container according to claim 2 or 3, wherein the flue comprises a side wall, the plurality of flue gas inlets are provided in the side wall, and the side wall and the rear wall are disposed in parallel; and
the container body comprises a top wall and a bottom wall, the rear wall is connected between the top wall and the bottom wall, and two ends that are of the side wall and that are disposed opposite to each other along a direction of a spacing between the top wall and the bottom wall are respectively connected to the top wall of the container body and the bottom wall of the container body.

5. The energy storage container according to claim 4, wherein the flue gas outlet is provided in the rear wall, or the flue gas outlet is provided in the top wall.

6. The energy storage container according to claim 4 or 5, wherein the air vent is provided in the rear wall, or the air vent is provided in the bottom wall.

7. The energy storage container according to claim 2 or 3, wherein the flue comprises two side walls disposed in parallel, one side wall is disposed opposite to the battery cluster, the other side wall is located between the one side wall and the rear wall, and the one side wall is provided with the plurality of flue gas inlets.

8. The energy storage container according to claim 7, wherein the other side wall is provided with the flue gas outlet, the rear wall of the container body is provided with a gas outlet, and the gas outlet communicates with the flue gas outlet; or a top wall of the flue is provided with the flue gas outlet, a top wall of the container body is provided with a gas outlet, and the gas outlet communicates with the flue gas outlet.

9. The energy storage container according to claim 7, wherein the other side wall is provided with the air vent, the rear wall of the container body is provided with a gas vent, and the gas vent communicates with the air vent; or a bottom wall of the flue is provided with the air vent, a bottom wall of the container body is provided with a gas vent, and the gas vent communicates with the air vent.

10. An energy storage system, wherein the energy storage system comprises the energy storage container according to any one of claims 1 to 9 and a power converter, and the power converter is configured to convert an alternating current output by an external alternating current power supply into a direct current and output the direct current to the energy storage container; and/or the power converter is configured to convert a direct current output by the energy storage container into an alternating current and output the alternating current to a load or a power grid.

11. An energy storage container exhausting flue gas directionally, wherein the energy storage container comprises at least one battery cluster, a container body, and at least one flue, the container body comprises a rear wall and a container door, the rear wall and the container door are disposed in parallel, the at least one battery cluster and the at least one flue are disposed in the container body, the plurality of battery clusters are arranged in parallel, the at least one battery cluster and the at least one flue are in a one-to-one correspondence, and the at least one flue is located between the at least one battery cluster and the rear wall;
each of the at least one flue is provided with a plurality of flue gas inlets and a flue gas outlet, and the flue gas outlet communicates with an external environment of the energy storage container;
each of the plurality of battery clusters comprises a plurality of battery packs, the plurality of battery packs are stacked, a pressure relief valve is disposed on an outer wall of each of the plurality of battery packs, and the pressure relief valve of each battery pack is disposed facing the flue; and
each of the plurality of flues extends along a stacking direction of the plurality of battery packs, each flue is provided with a plurality of flue gas inlets and a flue gas outlet, the flue gas outlet communicates with the external environment of the energy storage container, the plurality of flue gas inlets and the plurality of battery packs are in a one-to-one correspondence, a sealing member is disposed between the pressure relief valve of each battery pack and a corresponding flue gas inlet, an opening at one end of the sealing member covers the pressure relief valve of each battery pack, and the other end of the sealing member covers the corresponding flue gas inlet.

12. The energy storage container according to claim 11, wherein the outer wall of each battery pack is disposed opposite to a side wall of a corresponding flue, the outer wall of each battery pack is provided with a slot, the side wall of the flue is provided with a slot, and two ends of the sealing member are respectively located in the slot in the outer wall of the battery pack and the slot in the side wall of the flue.

13. The energy storage container according to claim 11, wherein each flue is provided with a plurality of sub-flues, the plurality of sub-flues all communicate with the flue, an extension direction of the plurality of sub-flues is perpendicular to an extension direction of the flue, the plurality of sub-flues and the plurality of battery packs are in a one-to-one correspondence, the plurality of sub-flues are provided with the flue gas inlet, and the pressure relief valve of each battery pack is disposed facing the flue gas inlet.

14. The energy storage container according to claim 13, wherein a spring component is disposed at the flue gas inlet of the plurality of sub-flues, an interface is disposed on each battery pack, and the spring component is inserted into an interface of a corresponding battery pack.

15. An energy storage system, wherein the energy storage system comprises the energy storage container according to any one of claims 11 to 14 and a power converter, and the power converter is configured to convert an alternating current output by an external alternating current power supply into a direct current and output the direct current to the energy storage container; and/or the power converter is configured to convert a direct current output by the energy storage container into an alternating current and output the alternating current to a load or a power grid.
